# EUROPEAN PATENT SPECIFICATION

(11) **EP 0 380 766 B1**
(45) Date of publication and mention of the grant of the patent: **26.05.1993**
(21) Application number: 89120359.8
(22) Date of filing: 03.11.1989
(51) Int. Cl.: B65G 57/18, B65G 57/081

(54) **Method and plant for packing profiles with the assistance of electromagnetic transfer hinging means**
Verfahren und Anlage zum Verpacken von Profilen mittels gelenkiger elektromagnetischer Überführungsmittel
Méthode et installation d'emballage de profilés à l'aide de moyens de transfert électromagnétiques articulés

(30) Priority: 04.01.1989 IT 8330289
(43) Date of publication of application: 08.08.1990
(73) Proprietor: S.I.M.A.C S.p.A., I-33017 Tarcento (Udine) (IT)
(72) Inventor: Castellani, Federico, I-33010 Treppo Grande (UD) (IT)
(74) Representative: D'Agostini, Giovanni, Dr.

(56) References cited:
- EP-A- 0 196 685
- FR-A- 2 124 221

## Description

The present invention relates to a method and plant for stock packing bars and profiles with the assistance of electromagnetic transfers hanged means.
The innovation finds particular even if not exclusive use downwards of the rolling plants for the respective packing of profiles and rods of any section comprised the profiles that require in the stock layers overlap packaging with upsetting condition as requested using overlapping of alternative layers of (N) and (N - 1) rods/profiles as for example the profiles having "L" section shape.
The same applicant with Italian patent Application No. 83488A/88 has already disclosed a packaging plant with electromagnetic transfer hanged means.

In said plant substantially two rows of electromagnet hanged means as electromagnetic pick-up head rows that can obviously even to pick-up layers of (N) and (N - 1) rods to transfer them in a packaging zone.
This plant with pick-up hanged means however does not allow stock layers upsetting in said packaging zone.
FR-A-2124221 discloses a packaging device for rolled profiles composed of alternate stratums of (n) and (n-1) profiles.
This solution utilizes a complex transfer device operating with two transfer apparatuses, both placed under the advancing line of the respective profiles and upwards the packaging zone:
· the first one transfer apparatus able to transfer two stratums at time in advanced progression and able to depose the most advanced one stratum in said packaging zone and
· the second one transfer apparatus being able to transfer a profile stratum on said packaging zone in upsetting condition.
This solution is however complex and the second one upsetting transfer apparatus cannot operate when the first transfer apparatus is operating above it, thus limiting both movements and the packaging speed.
This solution has however the advantage to use simply picking-up of the stratums from under the advancing line plane without head magnetic means.
EP-A-0196685 discloses a package comprising one delivery line with conveyors and with movable abutments to form layers of rolled stock, removal means that serve also to form stacks of such rolled stock and movable arms with magnetic heads, such packager being able to take layers of rolled stock which are all right-side-up or are all upside-down, the arms with magnetic heads having an upper engagement position and a lower engagement position to engage the rolled stock, there being one single series of heads able to take the rolled stock right-side-up and to overturn it, as required, with rotation of 180° after having taken it.
In particular to one side of said packaging zone we have said advancing line and to the opposed side we have only one upsetting transfer means with rotatable magnetic heads able to pick-up the profiles or bar-stratums formed in the advancing line (upwards the packaging zone) and deposit it one at time, in said packaging zone in alternate condition, namely one in right-side-up from above the advancing line (without overturning or without upsetting) and the other in upside-down from under said advancing line (with overturning = rotation of 180° of said magnetic heads before deposit the stratum in said packaging zone).
This solution is more simple if compared to the solution disclosed in FR-A-2124221, but have the same drawback to be obliged to prepare and transfer one stratum at time.
Namely the preparation time of the respective stratum constitutes a strong limitation in packaging speed.
Furthermore be noted that in increasing speed it is easy to have profile cottings.
In this point of view FR-A2124221 has the transfer means upwards the packaging zone and EP-A-0196685 has the transfer means downwards the packaging zone, but extends its operation upwards the packaging zone, having pick-up with the last one. This means that both right-side-up and upside-down stock, bar or profile stratum have to be treated alternatively in the same side of the packaging zone with evident more important tangling danger.
Scope of the present invention is to obviate the above-mentioned inconveniences and allow to give the possibility to increase the packaging speed avoiding profile cottings.

This and other scopes are reached with the present innovation as claimed solving the problems exposed by a method for packing rods/profiles comprising the following steps:
- transversal advancement of rods/profiles with respect to the longitudinal direction of the products, implicating fixed and/or movable stop effaceable means for the formation of separate stock layers,
- electromagnetic transfer of two successive layers (N,N-1) at the same time, in order to deposit them, one to a packaging zone and one to an upsetting transfer means having stock layers electromagnetic pick-up, the upsetting transfer means being able to upset and transfer the deposited layer into to the packaging zone,
- said electromagnetic transfer being realized by at least two hanged electromagnetic head rows, movable between a lowering and a raising position and transversally for bringing, lifting and depositing said stock layers in the packaging zone and in said upsetting means;
- said electromagnetic hanged transfer means being placed upstream of said packaging zone;
- said upsetting transfer means being placed downstream of said packaging zone.

Similarly as claimed the invention concerns a packaging plant of the type comprising:
- advancing means for transversal advancement of rods/profiles with respect to the longitudinal direction of the products, implicating fixed and/or movable stop effaceable means for the formation of separate stock layers (N, N - 1, .....);
- upsetting transfer means of said layers having stock layers electromagnetic pick-up;
- electromagnetic transfer means of two successive layers (N,N-1) at the same time, able to pick-up two stratums at time and deposit them one to a packaging zone and one to said upsetting transfer means, wherein
- said electromagnetic transfer means, are realized in at least two hanged electromagnetic head rows movable between a lowering and a raising position and transversally for bringing and lifting and depositing said stock layers in the packaging zone and in said upsetting means;
   and wherein:
   · said electromagnetic hanged transfer means are placed upstream of said packaging zone and
   · said upsetting transfer means are placed downstream of said packaging zone, the upsetting transfer means being able to upset and transfer the deposited layer into the packaging zone.
Said magnetic head means rows being hanged do not hamper the stock layer preparation and the preparation time can be done in the same time when the hanged transfer means operates without interference with the lower apparatuses and interference between transfer apparatuses are further avoided to avoid cottings and increase packaging speed.
These and others advantages will appear from the following itemized description of preferential solutions of realization with the assistance of the included drawing whose particulars are not to be considered limitative but only exemplificative.

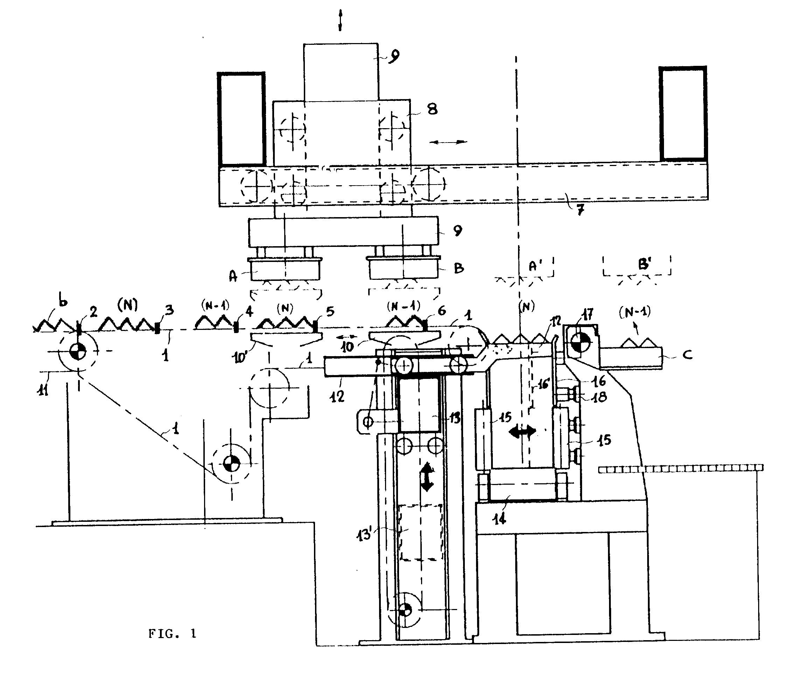

Figure 1 represents a schematic view of the plant in accordance with the invention.

Making reference to the figure, it comprises:
- First advancing means (11) associated to disappearing first fixed stop means (2) for accumulating the advancing rods in advancement in said first advancing means (11);
- Second transversal advancing rod means (1, b) with endless belt or chain comprising:
- second fixed disappearing stop means (3) for the formation of layers of (N) rods/profiles;
- third fixed stop disappearing means (4) for the formation of (N -1) layers of rods/profiles, or vice-versa;
- fourth disappearing stop means (5, 6) associated to movable support means (10) for determining a collimation of the formed layer, said support means being movable up and under the transport and advancement plane of the said second transversal advancing means (1);
- stock (rod/profiles) layers holding means with lowerable support basis (12) for the formation of the package;
- stock layers upsetting means (17 - C) to upset and transfer said stock layers downwards into said packaging zone;
- electromagnetic transfer means with at least two rows of electromagnets head hanged means (A, B) movable in lowering and hoisting (9, 13 - 13') and transversally (18) for lifting said stock layers of (N) and/or (N - 1) rods/profiles, and transferring them in said packaging zone and in said upsetting means (C).

The drawing advantageously shows that the displacement of the rows of said electromagnetic head hanged means is actuated with aerial set system guide means (7) that supports a bridgecrane (8) which can move vertically the entire magnet means structure (9) of the couple of electromagnet rows (A - B).

The packaging holdall comprises advantageously two series of vertical opposed rollers (15) and a series lower rollers (14) (the second ones can be realized also in endless belt transporter system).
An entire broadside, (preferably in the downwards side 16) with respective rollers (15), is movable in nearness and removal (16') respect to the opposed rollers, by means of ensemble of hydraulic cylinders (18) in order to vary the breadth of the forming stock package as desired.
A third series of electromagnets (C) is mounted downwards on revolving arm (17) and is suitable to receive one of the two stock layers (N - 1) bars/profiles, from the second row of electromagnetic head hanged means (B), this second row being vertically displaceable over it (B') while the other first electromagnetic heads row is displaceable over the packaging zone (A').
The packaging plant can operate obviously with stock layers of N and N - 1 bars/profiles or with stock layers of N and N bars/profiles.
The two raisers (10 and 10') under said hanged electromagnetic heads (A, B) lift simultaneously the two layers (N) and (N - 1) towards the magnets A and B that are endowed of combs or templates to avoiding the bars/profiles assume not correct positions.
Operating system with stock layers of (N) and (N - 1) bars/profiles with respective upset of one of them:
The cart (8) which supports the magnets A and B, after lifting (9), displaces laterally along the ways of running (7) positioning:
- the electromagnets (A) vertically of the package holdall;
- the electromagnets (B) over the electromagnets of revolving device (C).
Simultaneously the magnets A and B are lowered through the beam guide means (9) by appropriate command (that can be of any type), filing respectively :
- the layer (N) in the package holdall.
- the layer (N - 1) (or different) on the spins of electromagnets (C).
- the electromagnets (A, B) are relifted and moved in the starting position, over the two raisers (10'-10).
- when the cart is beyond the encumber of rotation of the device with electromagnets (C) the last will carry out the rotation of 180° and stop over the package holdall laying the layer N - 1 (or different or even of equal number etc.).
- the electromagnets (C) return in starting position awaiting to receive a following. In this way is possible to made any combination in the package, both with layers of different number and in overturned position or not.

## Claims

1. A method for packing rods/profiles (b) comprising the following steps:
- transversal advancement of rods/profiles with respect to the longitudinal direction of the products, implicating fixed and/or movable stop effaceable means (2,3,4,5,6) for the formation of separate stock layers (N,N-1, ...)
- electromagnetic transfer of two successive layers (N,N-1) at the same time, in order to deposit them, one to a packaging zone (12) and one to an upsetting transfer means having stock layers electromagnetic pick-up (C), the upsetting transfer means being able to upset and transfer the deposited layer into the packaging zone (12),
- said electromagnetic transfer being realized by at least two hanged electromagnetic head rows (A,B), movable between a lowering and a raising position and transversally for bringing, lifting and depositing said stock layers in the packaging zone (12) and in said upsetting means (C);
- said electromagnetic hanged transfer means (A-B,9) being placed upstream of said packaging zone;
- said upsetting transfer means (C) being placed downstream of said packaging zone.

2. A packaging plant of the type comprising:
- advancing means (11, 1) for transversal advancement of rods/profiles with respect to the longitudinal direction of the products, implicating fixed and/or movable stop effaceable means (2, 3, 4, 5, 6) for the formation of separate stock layers (N, N - 1, .....);
- upsetting transfer means of said layers having stock layers electromagnetic pick-up ( C );
- electromagnetic transfer means of two successive layers (N,N-1) at the same time, able to pick-up two stratums at time and deposit them one to a packaging zone (12) and one to said upsetting transfer means, wherein
- said electromagnetic transfer means (7, 8, 9) are realized in at least two hanged electromagnetic head rows (A, B) movable between a lowering and a raising position and transversally for bringing and lifting and depositing said stock layers in the packaging zone (12) and in said upsetting means (C);
and wherein:
· said electromagnetic hanged transfer means (A-B, 9) are placed upstream of said packaging zone and
· said upsetting transfer means (C) are placed downstream of said packaging zone, the upsetting transfer means being able to upset and transfer the deposited layer into the packaging zone.

3. A packaging plant as claimed in claim 2., characterized in that it comprises:
- First advancing means (11) associated to disappearing first fixed stop means (2) for accumulating the advancing stock as rods/profiles in advancement in said first advancing means (11);
- Second transversal advancing stock means (1, b) with endless belt or chain comprising:
- second fixed disappearing stop means (3) for the formation of stock layers of (N) rods/profiles;
- third fixed stop disappearing means (4) for the formation of said stock layers of (N -1) rods/profiles, or vice-versa;
- fourth disappearing stop means (5, 6) associated to movable support means (10) for determining a collimation of the formed stock layer/s, said support means being movable up and under the transport and advancement plane of the said second transversal advancing means (1);
- stock layers holding means with lowerable support basis (12) for the formation of a stock package in said packaging zone;
- stock upsetting means (17 - C) to upset and transfer said stock layers into said packaging zone;
- electromagnetic transfer means with at least two rows of electromagnets hanged means (A, B) movable in lowering and hoisting (9, 13 - 13') and transversally (18) for lifting said stock layers (N) and/or (N - 1), and transferring them or in said packaging zone or in said upsetting means (C) and wherein the displacement of the rows of said electromagnets hanged means is actuated with aerial set system guide means (7) that support a bridgecrane (8) which can move vertically the entire magnet means structure (9) of the couple of electromagnet rows (A - B).

## Patentansprüche

1. Eine Methode zum Stapeln von Stangen/Profilen (b) in folgenden Schritten:
- Bewegung der Stangen/Profile quer zur Längsrichtung der Produkte, mit festen und/oder beweglichen auslöschbaren Anschlagelementen (2,3,4,5,6) zur Bildung von getrennten Lagerschichten (N, N-1, ...)
- gleichzeitiger elektromagnetischer Transport zweier aufeinanderfolgender Schichten (N, N-1,) zwecks Abladen der einen in einer Packzone (12) und der anderen auf einem Aufricht-Transportmittel mit elektromagnetischer Aufnahme für die Schichten (C), das die Schichten aufrichten und . in die Packzone (12) befördern kann,
- wobei der besagte elektromagnetische Transport über mindestens zwei aufgehängte elektromagnetische Kopfreihen (A,B) erfolgt, die zwischen einer Senk- und einer Hebestellung beweglich sind sowie in Querrichtung, um besagte Schichten zu heben,in die Packzone (12) zu dem genannten Aufricht-Transportmittel (C) zu befördern und dort abzuladen;
- wobei besagte aufgehängte elektromagnetische Transportmittel (A-B,9) der genannten Packzone vorgeschaltet sind;
- wobei besagte Aufricht-Transportmittel der genannten Packzone nachgeschaltet sind.

2. Eine Stapelanlage mit:
- Fördermittel (11,1) zur Bewegung von Stangen/Profilen quer zur Längsrichtung der Produkte, mit festen und/oder beweglichen auslöschbaren Anschlagelementen (2,3,4,5,6) zur Bildung von getrennten Lagerschichten (N, N-1, ...);
- Aufricht-Transportmittel für die Schichten mit elektromagnetischer Aufnahme (C);
- Mittel zum gleichzeitigen elektromagnetischen Transport zweier aufeinanderfolgender Schichten (N, N-1,) zwecks Abladen der einen in einer Packzone (12) und der anderen auf besagtem Aufricht-Transportmittel, wobei
- die genannten elektromagnetischen Transportmittel (7,8,9) als mindestens zwei aufgehängte elektromagnetische Kopfreihen (A,B) geformt sind, die zwischen einer Senk- und einer Hebestellung beweglich sind sowie in Querrichtung, um besagte Schichten zu heben,in die Packzone (12) zu dem genannten Aufricht-Transportmittel (C) zu befördern und dort abzuladen;
und wobei
· besagte aufgehängte elektromagnetische Transportmittel (A-B,9) der genannten Packzone vorgeschaltet sind;
· wobei besagte Aufricht-Transportmittel der genannten Packzone nachgeschaltet sind und die Schichten aufrichten und . in die Packzone (12) befördern können.

3. Eine Stapelanlage wie nach Anspruch 1, gekennzeichnet dadurch, daß sie umfaßt:
- Ein erstes Fördermittel (11), das mit dem ersten beweglichen auslöschbaren Anschlagelement (2) zur Sammlung des Förderguts wie Stangen/Profile in Bewegung in dem ersten Fördermittel (11) verbunden ist;
- Ein zweites Querfördermittel (1,b) mit endlosem Band oder Kette, das umfaßt:
- ein zweites bewegliches auslöschbares Anschlagelement (3) zur Bildung von Lagerschichten von (N) Stangen/Profilen;
- ein drittes bewegliches auslöschbares Anschlagelement (3) zur Bildung von besagten Lagerschichten von (N-1) Stangen/Profilen;, oder umgekehrt;
- ein viertes bewegliches auslöschbares Anschlagelement (5,6), das mit einem beweglichen Stützmittel (10) verbunden ist, um eine Ausrichtung des/der gebildeten Lagerschichten zu bestimmen, welches letztere über und unter die Förderebene des genannten zweiten Querfördermittels bewegbar ist (1);
- Lagerschicht-Haltemittel mit absenkbarer Stützbasis (12) zur Bildung eines Lagerstapels in besagter Packzone;
- Aufrichtmittel (17-C) zum Aufrichten und Befördern der genannten Lagerschichten in die besagte Packzone;
- elektromagnetische Transportmittel mit mindestens zwei Reihen aufgehängter Elektromagneten (A,B), die nach oben und unten beweglich sind (9, 13-13') sowie quer (18), um besagte Lagerschichten anzuheben (N und/oder N-1) und sie entweder in besagte Packzone oder in das genannte Aufrichtmittel (C) befördern und in denen die Bewegung der Reihn der genannten Elektromagneten durch Luftregelungsführmittel (7) erfolgt, die einen Brückenkran (8) tragen, der die gesamte Magnetstruktur (9) des Elektromagnetreihenpaars (A-B) auf und ab bewegen kann.

## Revendications

1. Une méthode pour l'emballage de barres/profils (b) qui comprend les étapes suivantes:
- avancement transversale de barres/profils en respectant la direction longitudinale des produits, qui implique des moyens d'arrêt disparaissants fixes et/ou mobiles (2,3,4,5,6) pour la formation de couches de stock séparées (N, N-1, ...).
- transfert électromagnétique de deux couches successives (N, N-1) aux même moment, pour les déposer, une dans une zone d'emballage (12) et une dans un moyen de transfert renversant ayant un ramassage électromagnétique de couches de stock (C).
- le moyen de transfert renversant étant capable de renverser et transférer la couche déposée dans la zone d'emballage (12),
- dit transfert électromagnétique étant réalisé par au moins deux files électromagnétiques suspendues (A,B), mobiles d'une position d'abaissement et de soulèvement et de manière transversale pour apporter, soulever et déposer dites couches de stock dans la zone d'emballage (12) et dans dits moyens renversants (C);
- dits moyens électromagnétiques de transfert suspendus (A-B, 9) étant placés en amont de la dite zone d'emballage;
- dits moyens de transfert renversants (C) étant placés en aval de la dite zone d'emballage.

2. Un équipement d'emballage de genre comprenant:
- moyens pousseurs (11, 1) pour l'avancement transversal des barres/profils en respectant la direction longitudinale des produits, impliquant des moyens d'arrêt fixes et/ou mobiles disparaissants (2, 3, 4, 5, 6).pour la formation de couches de stock séparées (N, N-1...).
- moyen de transfert renversant de dites couches ayant un ramassage électromagnétique de couches de stock (C);
- moyen électromagnétique de transfert de deux couches successives (N, N-1) au même moment, capable de ramasser deux strates à la fois et de les déposer un dans une zone d'emballage (12) et un dans dits moyens de transfert renversants (C)., dans lesquels
- dits moyens de transfert électromagnétiques (7, 8, 9) sont réalisés dans au moins deux files suspendues électromagnétiques (A, B) mobiles d'une position d'abaissement et de soulèvement et de manière transversale pour apporter et soulever et déposer dites couches de stock dans la zone d'emballage (12) et dans dits moyens renversants (C);
Et dans lesquels:
· dit moyens de transfert électromagnétiques suspendus (A-B, 9) sont placés en amont de dite zone d'emballage et
· dit moyens de transfert renversants (C) sont placés en aval de la dite zone d'emballage, les moyens de transfert renversants étant capables de renverser et transférer la couche déposée dans la zone d'emballage.

3. Un équipement d'emballage comme revendiqué dans la revendication 2, caractérisé par le fait qu'il comprend:
- un premier moyen avançant (11) associé au premier moyen d'arrêt fixe disparaissant (2) pour accumuler le stock avançant comme les barres/profils pendant l'avancement dans le dit premier moyen pousseur (11);
- un deuxième moyen transversal de stock avançant (1, b) avec ceinture infinie ou chaîne qui comprend:
- un deuxième moyen d'arrêt fixe disparaissant (3) pour la formation de couches de stock de (N) barres/profils;
- un troisième moyen d'arrêt fixe disparaissant (4) pour la formation de dites couches de stock de (N-1) barres/profils, ou vice versa;
- un quatrième moyen d'arrêt disparaissant (5, 6) associé au moyen de support mobile (10) pour déterminer une collimation de la/des couche/s de stock formée/s, dit moyen de support étant mobile sur et sous le transport et le plan d'avancement du dit deuxième moyen avançant transversal (1);
- moyen soutenant de couches de stock avec base de support abaissable (12) pour la formation d'un emballage de stock dans dite zone d'emballage;
- les moyens de stock renversants (17 - C) pour renverser et transférer dites couches de stock dans dite zone d'emballage;
- moyens de transfert électromagnétiques avec au moins deux files d'électro-aimants suspendus (A, B) mobiles dans l'abaissement et levage (9, 13 - 13') et de manière transversale (18) pour soulever dites couches de stock (N) et/ou (N-1), et les transférer ou dans dite zone d'emballage ou dans dits moyens renversants (C) et dans lesquels le déplacement des files de dits électro-aimants suspendu est actionné par un moyen de set de système de guide aérien (7) qui supporte un pont-grue (8) qui peut déplacer verticalement et complètement la structure du moyen électro-aimant (9) du couple de files d'électro-aimants (A -B).
